Europäisches Patentamt

European Patent Office

Office européen des brevets

(19)

(11) Publication number: **0 188 131**
**A1**

(12) **EUROPEAN PATENT APPLICATION**

(21) Application number: **85309546.1**

(22) Date of filing: **30.12.85**

(51) Int. Cl.⁴: **G 01 F 1/22**

(30) Priority: **04.01.85 US 688907**

(43) Date of publication of application:
**23.07.86 Bulletin 86/30**

(84) Designated Contracting States:
**DE FR GB IT SE**

(71) Applicant: **Universal Flow Monitors**
**1755 E. Nine Mile Road**
**Hazel Park Michigan 48030(US)**

(72) Inventor: **Rosaen, Lars O.**
**45451 Tutlehead Drive**
**Plymouth Michigan MI 48170(US)**

(74) Representative: **Bryer, Kenneth Robert**
**K.R. Bryer & Co. Coosehecca**
**Chacewater Truro TR4 8QU Cornwall(GB)**

(54) A flow meter with displaceable flow rate indicator.

(57) A flow meter (10) for measuring the rate of flow of fluid in a fluid system (12) includes a transparent tubular housing (16) in which an indicator in the form of a piston (18) having a circumferential indicator edge is acted upon by fluid flowing through the housing (16) from an inlet (30, 32) to an outlet (42, 44) thereof. At least a portion of the inner peripheral wall (17) of the housing (16) is tapered outwardly from the inlet to the outlet so that fluid can pass by the piston (18) as the piston is displaced by the fluid.

The housing (16) is marked with scale indicia (26, 28, 59) representing flow rates against which the indicator edge (19) of the piston (18) can be read as the piston is displaced by the flowing fluid in the housing (16). A temperature sensitive label (52) providing a visible indication of fluid temperature can be orthogonally aligned with respect to the flow rate scale (26) on the flow meter to permit accurate placement of a graphic overlay (56, 78) exhibiting representations of a different fluid characteristic which varies with changes in the flow rate and temperature of the fluid within the ranges indicated by the meter (10).

Fig-2

- 1 -

# A FLOW METER WITH DISPLACEABLE FLOW RATE INDICATOR

The present invention relates generally to meters for measuring flow rate of fluid in a fluid system, and more particularly to such a meter having visible indicators for displaying an indication of fluid characteristics related to the temperature and flow rate of the fluid.

There are many types of previously known flow meters which provide a visual indication of the flow rate of a fluid in a fluid system. For example, in a moving vane type flow meter, a vane is displaced and oriented to a position corresponding to the flow rate of the fluid passing through the meter. The vane may be linked to an arm extending across the face of a scale so that the position of the arm on the scale provides a visible indication of the flow rate of the fluid. Quite often, the indicator is positioned outwardly of the flow meter so that the indicator is visible from the exterior of the flow meter housing. As a result, the linkage between the vane acted upon by the fluid and the indicator can add a substantial amount of weight and inertia to the vane mechanism, which can reduce the efficiency and accuracy of the reading provided by the indicator.

Of course, other indicator means may also be external to the flow meter such as a digital display device. However, such devices are substantially more complex and often more expensive than simple mechanical linkages and indicators. In any event, previously known flow meters are of limited use in that they convey no information as to other characteristics of the fluid such as temperature, or characteristics of a fluid which may change in response to changes in temperature or flow rate.

In addition, although there are known means for measuring the temperature of a fluid, previously known thermometers are not well adapted for use with flow meters. As a result, the empirical data which is provided by the previously known flow rate meters and temperature indicators must be analysed and and used for the basis of calculations according to standard material property relationships in order to obtain information about other characteristics of the fluid in the system. For example, in order to establish the net heat flow rate between two points in a fluid system, substantial calculations must be performed utilising the data from the previously known flow meters and temperature indicators. Similarly, when the viscosity of the fluid is affected by changes in temperature of the fluid, it may be necessary to perform complex calculations to determine the viscosity of the fluid under existing fluid system conditions. While such calculations can be handled by trained engineers, such a process can be time consuming and cannot be handled by untrained mechanics.

Although it may be possible to utilise a computor in processing the information, such a system is extremely complex and prohibitively expensive, especially for small fluid systems. In any event, the previously known flow rate meters do not provide a visual indication of the temperature and flow rate in a manner which can readily exhibit other desired fluid flow characteristics, or in a manner which would be readily understood by unskilled technicians and others without substantial data processing.

The present invention seeks to overcome the above mentioned disadvantages by providing a flow meter which provides an indication of the flow rate by permitting direct observation of a displaceable member acted upon by the flow of fluid.

According to the present invention, therefore, there is provided a flow meter characterised in that it comprises a housing defining an elongate hollow chamber having a fluid inlet at one end and a fluid outlet at the other end with at least a part of the peripheral wall of said chamber being formed of a transparent material, a piston having means defining a reference index substantially perpendicular to the longitudinal axis of the chamber slidably housed therein and urged by resilient biasing means towards one end of the chamber, at least a part of the inner peripheral wall of the housing tapering outwardly away from the said one end of the housing, at least one peripheral, portion of the said piston circumferentially contacting the inner peripheral wall of the housing at the said one end of the housing.

In the preferred embodiment of the present invention, the flow meter housing is a tubular transparent body in which a displaceable reference index or flow rate indicator in the form of a piston is spring biased toward one end of the housing. The indicator is linearly displaceable along the tubular housing portion so that its position along the scale of flow rates indicates the flow rate as determined by the flow meter. This can be accomplished by tapering the inner peripheral wall of the tubular housing at a predetermined inclination from one end to the other, the degree of inclination depending upon the range of flow rates to be indicated by the meter. Moreover, the end of the tubular housing toward which the piston is urged by the fluid may include an enlarged bore portion to form a bypass for fluid when the flow rate of fluid exceeds a predetermined value.

A temperature sensitive label scaled to define a range of temperatures for the operating fluid may be fitted to the outside of the housing in a position orthogonal to the flow rate scale. In addition, a chart member having a graphic representation of a fluid characteristic relating to flow rate and temperature can be superimposed upon or aligned with the flow rate and temperature scales so that a relevant value for an additional fluid characterisitic can be displayed by the meter without further analysis of fluid flow characteristics being required.

An advantageous use of a flow meter constructed in accordance with the present invention includes the provision of two flow meters connected into a fluid system at predetermined points to determine the heat flow rate, and thus the relative gain or loss of heat between those points of the system. In such a case, the graphic representation on the chart means includes indicia corresponding to the heat flow rate at a particular fluid flow rate and temperature of the fluid. By comparing the indications provided by each of the meters, the difference in heat flow rates between the two points of the system is relatively easily understood from observation of the chart means on each indicator. An alternative advantageous use of a flow meter in accordance with the present invention permits the viscosity of the fluid to be determined from observation of the chart means.

Thus, the present invention provides a flow meter in which a visible reference index or indicator is directly acted upon by the fluid flowing through the meter, and the complexity and bulk of the flow meter structure is minimised to provide a highly efficient indication of flow rate. In addition, the present invention provides means for utilising two sensed characteristics of the flowing fluid to exhibit the condition of a third characteristic related to the two sensed characteristics. In addition, the indication exhibited can be readily understood by unskilled or untrained personnel, and does not require mental or computerised analysis of fluid characteristics exhibited by the flow meter to be performed.

Various embodiments of the invention will now be more particularly described, by way of example, with reference to the accompanying drawings, in which:

Figure 1 is a front plan view of the flow meter constructed in accordance with the present invention;

Figure 2 is a rotated cross-sectional view taken substantially along line 2-2 in Figure 1;

Figure 3 is a front view of a portion of the apparatus shown in Figure 1;

Figure 4 is a sectional view taken substantially along the line 4-4 in Figure 2;

Figure 5 is a sectional view taken substantially along the line 5-5 in Figure 2;

Figure 6 is a sectional view taken substantially along the line 6-6 in Figure 2;

Figure 7 is a diagrammatic view of a fluid system employing a pair of flow meters constructed in accordance with the present invention and showing a modification thereof; and

Figure 8 is an enlarged front view of a portion of the flow meter shown in Figure 6.

In the drawings like reference numerals have been used to refer to like parts in the different Figures.

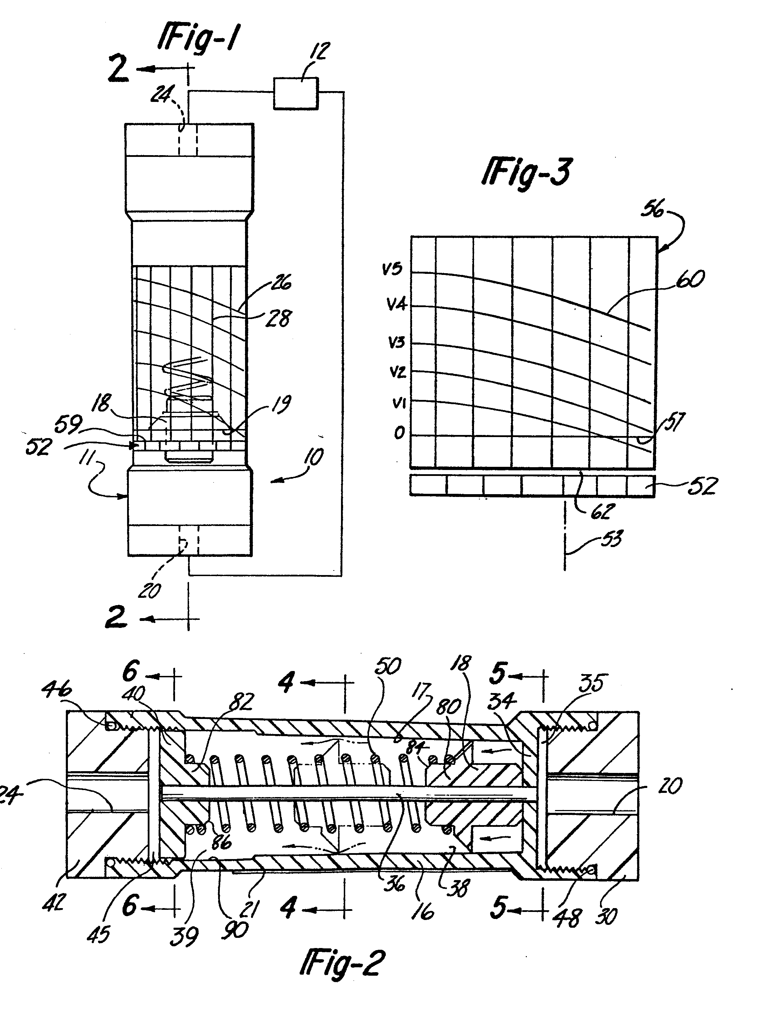

Referring first to Figure 1, a flow meter 10 according to the present invention is shown connected in fluid. communication with a fluid system 12. The flow meter housing 11 has an inlet 20 and an outlet 24 and includes a tubular, transparent body portion 16 through which a displaceable indicator element 18 having a reference index 19 can be viewed. As will be described in greater detail herinafter, as fluid from the system 12 flows into the inlet 20 of the meter 10, the indicator element 18 is displaced within the body portion 16 to provide an indication of the flow rate of fluid through the meter 10. The flow meter 10 may be provided with flow rate scale indicia 26 so that the reference index 19 on the element 18 identifies a particular flow rate value at a viewing face 21 (see Figure 2) of the housing. After having passed through the meter 10 the fluid flows back into the system 12 through the outlet 24.

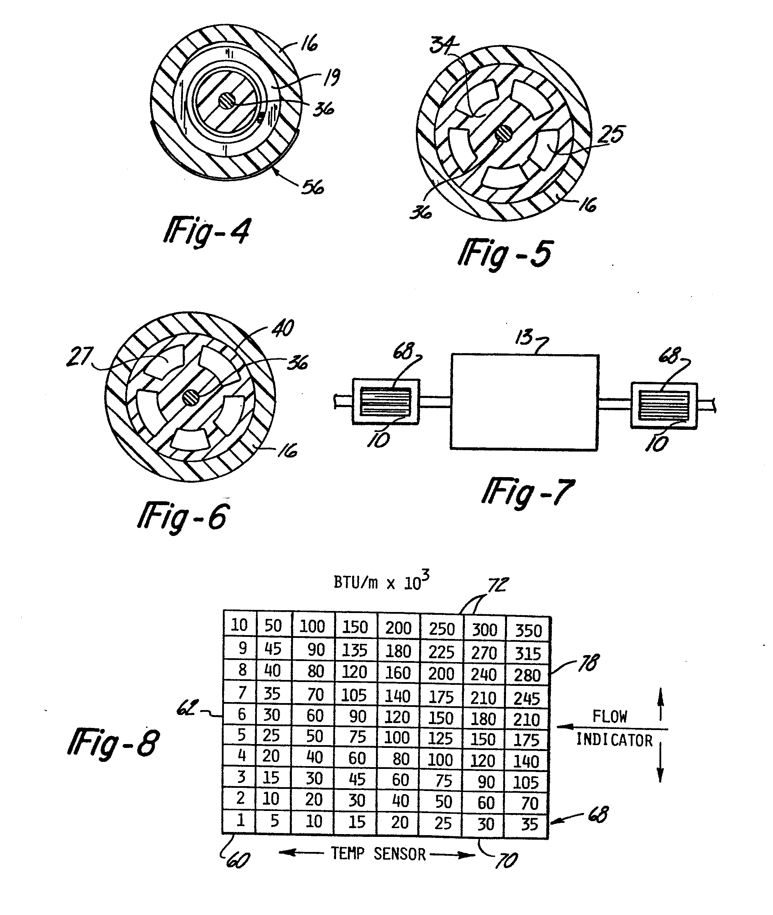

As best shown in Figure 2, the inlet 20 is formed as a bore in a threaded end cap 30 which closes an open end of the transparent housing portion 16. The bore 20 in the end cap 30 is adapted to receive a fluid coupling for connecting the meter 10 in fluid communication with the system 12 in a well known manner. The tubular housing 16 includes a partition wall 34 having openings 25 (see Figure 5) which supports an elongate guide road 36 extending axially through a chamber 38 formed by the tubular housing 16. The rod 36 can be secured in the wall by embedding, welding or other fastening means. The innermost part of the end cap 30 is spaced from the wall 34 to form a chamber 35 therebetween in communication with the passage 20 and the openings 25 in the partition wall 34. The end cap 30 is sealed to the end of the housing 16 by an "o" ring 48.

The other end of the guide rod 36 is secured within a support body 40 which, as best shown in Figure 6, has a spider-like shape with apertures 27. The support body 40 is retained in position adjacent an end cap 42 threadably engaged in the tubular end of the transparent housing portion 16 and having a fluid passageway constituting the outlet 24 extending therethrough. The end cap 42 is spaced slightly from the support body 40 to form a chamber 45 between them. The passageway 44 is adapted to receive a fluid coupling in a well known manner to form the outlet 24. The end cap 42 is sealed in a fluid tight manner against the housing portion 16 by an "o" ring 46.

The indicator element 18 includes a bore dimensioned to permit the member 18 to slide along the guide rod 36. The indicator element 18 comprises a substantially cylindrical body having a circumferentially extending indicator edge 19 constituting the reference index. When the end of the indicator body 18 abuts against the end wall 34, the indicator edge 19 is located at a point along the inner periphery of the tubular housing 16 which constitutes a zero-point for the flow rate scale. At least a portion of the inner peripheral wall of the housing portion 16, such as the portion 17 opposite the viewing face 21, tapers radially outwardly from the end wall 34 towards the support body 40 so that displacement of the indicator member 18 along the guide rod 36 causes at least a portion of the indicator edge 19 to become spaced from the inner periphery of the tubular housing 16 and permit passage of fluid toward to outlet 24. Nevertheless, in the preferred embodiment, a portion of the edge 19 abuts against the viewing face portion 21 of the transparent housing 16 and remains visible through the housing. In addition, the peripheral wall at the end portion 39 of the chamber 38 includes an enlarged radial recess 90. Once the indicator body 18 is urged into the end portion 39 of the chamber 38, fluid can freely pass beyond the indicator 18. This occurs when the flow rate exceeds the normal range of the meter.

A spring 50 extends between the support 40 and the indicator member 18, thus normally retaining the indicator member 18 in position against the end wall 34. The coil spring 50 fits over a stub end 80 of the indicator member 18 and a stub projection 82 on the support body 40. The outermost portions of the stub ends 80 and 82 are radiused as shown at 84 and 86, respectively, so that loops of the coil spring can freely slide over the stub ends without interference during compression of the spring 50.

It is to be understood that fluid introduced into the inlet passage 20 through the end cap 30 into the chamber 35 and from there through the apertures 25 defined in the end wall 34 and into contact with the indicator element 18 within the chamber 38. The indicator element 18 is thereby forced toward the outlet 24 (to the left as shown in Figure 2) against the force of the spring 50. The taper of the inner periphery of the wall 17 forming the tubular housing 16 is determined in accordance with the flow rate range to be indicated on the face of the meter 10 so that displacement of the indicator member 18 corresponds to predetermined flow rates indicated on the scale indicia 26. Moreover, the zero-point of the scale indicia 26 is aligned with the position of indicating edge 19 when the indicator 18 is at rest against wall 34.

Referring again to Figure 1, the flow meter 10 according to the present invention is well adapted for use with a temperature sensitive label 52 positioned on the outside of the casing 16 downstream of the zero-point indicated by the initial position of the indicator edge 19. Heat contained in the fluid passing through the system 12 is conducted through the housing 16 to the strip 52, which is adhesively secured to the exterior of the transparent part of the housing 16. Although the temperature sensitive strip can be constructed in any known manner, it is preferable that the strip include scaled graduations and numerical indicia to designate particular temperature ranges within which the strip 52 is effective. In any event, the strip 52 preferably includes a heat sensitive material which changes colour as the temperature reaches a predetermined level, and the colour changes gradually along the length of the strip as the temperature increases to provide a discrete indication of temperature. In the preferred embodiment, the strip includes discrete crystal segments, each of which changes colour at a predetermined, progressively higher temperature along the length of the strip.

As also shown in Figure 3 a chart member 56 for presentation of an additional fluid characteristic can be provided, to be applied over the transparent housing 16. The chart member 56 comprises a substantially transparent panel 57 having a graphic representation of a particular fluid characteristic marked thereon, and can be fitted onto the transparent housing 16 at a position along the housing 16 downstream of the temperature sensitive strip 52. The chart member 56 includes scale indicia 60 corresponding to the scale indicia 26, and a scale axis 62 corresponding to the temperature indicia displayed on the temperature sensitive strip 52. The alignment of the axes with the zero point of indicia 26 and corresponding temperature indicia on strip 52 enables the colour line (examplified by the dot and dash line at 53 in Figure 3) exhibited by the strip 52 to be projected upwardly to intersect with the indicator edge 19 of the indicator 18, whereby a current value of the characteristic indicated on the chart member 56 can be determined.

Referring particularly to Figure 3, the chart 56 shown includes graphic representations of the viscosity of a fluid at particular flow rates and temperatures in the form of curved lines 60. The graphic display represented by the curved lines 60 comprises five discrete values of viscosity, together with the variation in viscosity values with variation in temperature, as well as the flow rate which will occur at a predetermined viscosity and temperature. Thus, it will be understood that as the indicator edge 19 indicates the flow rate of the fluid flowing through the meter 10, and the coloured portion of the strip 52 indicates the temperature, (as shown for example by the dot and dash line in Figure 3), the projected intersection of these indications identifies a particular point on one of the curves 60 so as to provide a readily perceptible indication of the viscosity of the fluid flow through the system. Of course, it will be understood that the range of values indicated by the indicia 60 and the range of values indicated along the axis 62 are selected to correspond and register with the flow rate values defined on the indicia 26 marked on the housing 16 itself, and the temperature scale defined on the label 52, respectively, so as to provide a direct correlation between the flow rate, temperature and viscosity or other characteristic value displayed on the chart member 56. Moreover, it will be understood that the curved lines 60 can be represenatative of other parameters specifically related to the particular fluid flowing through the system 12.

An especially advantageous use of a flow meter constructed in accordance with the principles of the present invention and some preferred modifications thereof are shown in Figures 6 and 7. Figure 7 shows a part of a fluid system in which a flow meter 10 is connected into the upstream side of a part 13 of the flow system and another flow meter 10 is connected into the downstream side of the part 13 of the system. In addition, a chart 56 has been replaced with a chart 68 providing a graphic representation of heat flow rates for the particular fluid in the system as affected by flow rate of the system and the temperature of the fluid in the system.

As best shown in Figure 8, the chart member 68 has graphic indicia 78 in the form of sets of numeric characters indicating discrete values at various positions throughout the panel. Another novel feature of the chart panel 68 is that it incorporates sections of temperature sensitive material so that an entire section will graphically display a colour change in response to the change in the temperature of the fluid. Thus for example, an entire column 72 is coloured in response to temperature so that the coloration projects upwardly to intersect with the indicator edge 19 to permit observation of the heat flow rate at the particular point in the system. Accordingly, in the system connected as shown in Figure 7, a change in heat flow rate occuring through the part 13 of the overall fluid system can be readily detected by observing the difference in readings displayed by the meters 10 connected on in the upstream and downstream sides of the part 13.

Claims:

1. A flow meter (10) characterised in that it comprises a housing (11) defining an elongate hollow chamber (38) having a fluid inlet (20) at one end and a fluid outlet (24) at the other end with at least a part (16) of the peripheral wall of said chamber being formed of a transparent material, a piston (18) having means defining a reference index (19) substantially perpendicular to the longitudinal axis of the chamber (38) slidably housed therein and urged by resilient biasing means (50) towards one end of the chamber (38), at least a part of the inner peripheral wall (17) of the housing (11) tapering outwardly away from the said one end of the housing (16), and at least one peripheral portion (19) of the piston (18) circumferentially contacting the inner peripheral wall (17) of the housing (11) at the said one end of the housing.

2. A flow meter according to Claim 1, characterised in that there are further provided scale indica (26) marked along the longitudinal axis of the housing (11) and visible from the outside of the housing (11).

3. A flow meter according to Claim 1, characterised in that reference index (19) of the piston (18) comprises a circumferential edge of the piston.

4. A flow meter according to Claim 3, characterised in that the piston (18) has a substantially frusto-conical portion the wider end of which constitutes the said circumferential edge (19).

5. A flow meter according to any preceding Claim, characterised in that the said scale indicia (26) includes a circumferential base line (59) positioned at the point where the said circumferential edge(19)contacts the peripheral wall (17) of the housing (11).

6. A flow meter according to Claim 5, characterised in that there is further provided a temperature sensitive label (52) secured to the housing (11) at or adjacent the base line (59).

7. A flow meter according to any preceeding Claims, characterised in that the said housing (11) includes scale indicia (28) marked along the transparent wall portion (16) thereof and extending parallel to the longitudinal axis of the chamber (38).

8. A flow meter according to Claim 7, characterised in that there is further provided a temperature sensitive overlay 72 aligned with the scale indicia (26).

9. A flow meter according to any preceeding Claims, characterised in that the housing (11) comprises a tubular body (16) having a first end cap (30) at the said one end of the chamber (38), a second end cap (42) at the said other end of the chamber (38), and means for securing each of the two end caps (30, 42) to the said tubular body (16).

10. A flow meter according to any preceeding Claim, characterised in that the whole of the housing (11) is transparent.

11. A flow meter according to Claim 10, characterised in that each end cap (30, 42) includes a fluid passage (32, 44) for communicating between the housing chamber (38) and the exterior of said housing (11), and there are further provided means (48, 46) for sealing each of the second caps (30, 42) to the housing (11).

12. A flow meter according to any preceeding Claim, characterised in that the piston (18) is slidably mounted within the housing chamber (38) on an elongate rod (36) fixed at one end, within the housing chamber (38), to at least one wall (34) extending across an end of the housing chamber (38) the piston (18) having a bore through which the rod (34) passes.

13. A flow meter according to Claim 12, characterised in that there is further provided a support body (40) within the housing chamber (38), to which the other end of the rod (36) is fixed.

14. A flow meter according to any preceding Claim, characterised in that the housing (16) is formed with bypass means (90) for passing fluid around the piston (18) when the flow rate of fluid through the meter (10) exceeds a predetermined flow rate.

15. A flow meter according to Claim 16, characterised in that the bypass means (90) are constituted by a radially enlarged recess (90) at the said other end of the chamber (39).

*Fig-1*

*Fig-3*

*Fig-2*

**Fig-4**

16
19
36
56

**Fig-5**

34
25
36
16

**Fig-6**

40
27
36
16

**Fig-7**

68
13
68
10
10

**Fig-8**

BTU/m x $10^3$

| | | | | | | | |
|---|---|---|---|---|---|---|---|
| 10 | 50 | 100 | 150 | 200 | 250 | 300 | 350 |
| 9 | 45 | 90 | 135 | 180 | 225 | 270 | 315 |
| 8 | 40 | 80 | 120 | 160 | 200 | 240 | 280 |
| 7 | 35 | 70 | 105 | 140 | 175 | 210 | 245 |
| 6 | 30 | 60 | 90 | 120 | 150 | 180 | 210 |
| 5 | 25 | 50 | 75 | 100 | 125 | 150 | 175 |
| 4 | 20 | 40 | 60 | 80 | 100 | 120 | 140 |
| 3 | 15 | 30 | 45 | 60 | 75 | 90 | 105 |
| 2 | 10 | 20 | 30 | 40 | 50 | 60 | 70 |
| 1 | 5 | 10 | 15 | 20 | 25 | 30 | 35 |

72
78
62
68
60
70

FLOW INDICATOR

← TEMP SENSOR →

| DOCUMENTS CONSIDERED TO BE RELEVANT | | | EP 85309546.1 |
|---|---|---|---|
| Category | Citation of document with indication, where appropriate, of relevant passages | Relevant to claim | CLASSIFICATION OF THE APPLICATION (Int. Cl.4) |
| Y | GB - A - 1 500 507 (GLASS...) <br> * Fig.; page 1, lines 51-84 * <br> -- | 1-5,7, 9-13 | G 01 F 1/22 |
| Y | DE - A1 - 2 360 097 (LUDWIG GREFE GMBH) <br> * Fig. 1.,2; page 3 * <br> -- | 1-5,7, 9-13 | |
| A | FR - A1 - 2 458 797 (FELLER) <br> * Fig.; page 2, line 38 - page 3, line 33 * <br> -- | 1-4,7, 12,14, 15 | |
| A | DE - A1 - 2 509 447 (SWF...) <br> * Fig. * <br> -- | 1,3,4, 9,12, | |
| A | US - A - 3 882 724 (HEARN) <br> * Column 3, line 32 - column 4, line 4 * <br> ---- | | TECHNICAL FIELDS SEARCHED (Int. Cl.4) <br><br> G 01 F 1/00 |

The present search report has been drawn up for all claims

| Place of search | Date of completion of the search | Examiner |
|---|---|---|
| VIENNA | 08-04-1986 | BURGHARDT |